# EUROPEAN PATENT APPLICATION

(11) **EP 3 273 728 A1**
(43) Date of publication of application: **24.01.2018**
(21) Application number: 16764460.8
(22) Date of filing: 11.03.2016
(51) Int. Cl.: H04W 48/18, H04W 36/14, H04W 92/20

(54) **COMMUNICATION SYSTEM, BASE STATION, ACCESS POINT MANAGEMENT APPARATUS, TERMINAL, COMMUNICATION METHOD, RELAY METHOD, AND NON-TEMPORARY COMPUTER READABLE MEDIUM**

(30) Priority: 17.03.2015 JP 2015053052; 28.05.2015 JP 2015108456
(71) Applicant: NEC Corporation, Tokyo 108-8001 (JP)
(72) Inventor: ONISHI, Shinji, Tokyo 108-8001 (JP); SHIGA, Shingo, Tokyo 108-8001 (JP); MIZUKAMI, Daisuke, Tokyo 108-8001 (JP); EGASHIRA, Kazuhiro, Tokyo 108-8001 (JP); TAMURA, Toshiyuki, Tokyo 108-8001 (JP)
(74) Representative: MacDougall, Alan John Shaw
(86) International application number: PCT/JP2016/001363
(87) International publication number: WO 2016/147628

(57) **Abstract**

Provided is a communication system that can seamlessly provide a service that utilizes a MEC even in a case in which a communication terminal moves so as to cross over a wireless LAN communication area within a mobile communication area formed by a base station. A communication system according to the present invention includes a base station (10) that forms a mobile communication area, an access point (20) that forms a wireless LAN communication area, an access point managing device (30) that manages the access point, and an application server (40) that provides an application service to a communication terminal (50) located in the mobile communication area. In a case in which the communication terminal (50) moves into the wireless LAN communication area within the mobile communication area, the access point managing device (30) sets a data transmission path to the base station (10) and relays data transmission between the base station (10) and the communication terminal (50).

## Description

### Technical Field

The present invention relates to communication systems, base stations, access point managing devices, terminals, communication methods, relay methods, and programs and, in particular, relates to a communication system, a base station, an access point managing device, a terminal, a communication method, a relay method, and a program for wireless LAN communication.

### Background Art

In recent years, smartphones have spread rapidly, and users having smartphones are provided with increased opportunities to access what is called the Internet and are receiving a variety of services through the smartphones. It is contemplated that services with shorter time lags and in broader bands than the current services will be provided to users having smartphones or the like in the future. Non Patent Literature 1, which provides a service with a short time lag and in a broad band, describes a communication system that uses a MEC (Mobile Edge Computing).

A MEC is a device that provides application services and so on by disposing Cloud computing resources in the vicinity of a RAN (Radio Access Network) that is close to a mobile subscriber. A mobile subscriber is a subscriber who enters into a contract with a mobile communication service provider and can thus use a cellular phone terminal, a smartphone, or the like via a mobile network. As the MEC that provides application services is disposed at a position close to the mobile subscriber, data transmission with a short time lag can be achieved.

In addition, the rapid spread of smartphones in recent years has led to a problem of a marked increase in the data in mobile networks. Thus, mobile communication service providers are reducing the data communicated in the mobile networks by building wireless LAN communication areas and off-loading the traffic in the mobile networks to wireless LAN (Local Area Network) systems. As the wireless LAN communication areas are increased in order to increase the off-loading to the wireless LAN systems, the opportunities for the users having smartphones or the like to access the wireless LAN systems are increasing.

Therefore, it is expected that, from now on, wireless LAN communication areas will be interspersed within a mobile communication area formed by a base station managed by a mobile communication service provider of a mobile network. In addition, in order to provide a mobile subscriber with a seamless handover between a mobile communication area and a wireless LAN communication area, it is expected that the opportunities to contain the traffic of the wireless LAN system into a core network will increase.

Patent Literature 1 describes that a handover operation between a wireless LAN network and a PS (Packet Switch) network, which is a cellular phone network, is carried out with the use of an IMS (Internet Protocol Multimedia Subsystem).

In addition, Patent Literature 2 and Patent Literature 3 describe a configuration of a communication system in which a cellular phone connects to a cellular phone carrier network via either a wireless LAN network or a cellular phone network.

### Citation List

### Patent Literature

PTL 1: Japanese Unexamined Patent Application Publication No. 2007-325191
PTL 2: Japanese Unexamined Patent Application Publication No. 2015-23303
PTL 3: Published Japanese Translation of PCT International Publication for Patent Application, No. 2015-504267

### Non Patent Literature

NPL 1: Mobile-Edge Computing-Introductory Technical White Paper September 2014

### Summary of Invention

### Technical Problem

A MEC is disposed basically in the vicinity of a base station. Thus, when a MEC is disposed in the vicinity of a base station through which a communication terminal communicates, the communication terminal can receive a service provided by the MEC. However, a communication terminal may move within a mobile communication area to move into a wireless LAN communication area interspersed within the mobile communication area. When a communication terminal moves into a wireless LAN communication area in this manner, the traffic pertaining to the communication terminal is off-loaded to a wireless LAN system from a mobile network. The traffic off-loaded to the wireless LAN system cannot go through the base stations in the mobile network, which thus leads to a problem that the communication terminal cannot continue to receive the service that utilizes a MEC in the vicinity of a base station seamlessly.

In addition, the PS network, which is the cellular phone network, and the wireless LAN network are connected via an IMS in Patent Literature 1, and the wireless LAN network and the cellular phone network are connected via a cellular phone carrier network or a core network in Patent Literature 2 and Patent Literature 3 as well. Therefore, according to Patent Literatures 1 to 3, a cellular terminal that has moved into a wireless LAN network becomes unable to communicate with a base station disposed in the cellular phone network. Thus, when a communication terminal including a cellular terminal receives, for example, a service with a short time lag, a service restricted to a given base station, or the like from a server or the like disposed in the vicinity of that base station via the base station in the cellular phone network, the mobile communication systems disclosed in Patent Literature documents 1 to 3 face a problem in that the communication terminal cannot continue to receive that service.

This problem described above is not limited to a MEC. That is, it also arises in a service provided in a mobile network.

The present invention is directed to providing a communication system, a base station, an access point managing device, a terminal, a communication method, a relay method, and a program that enable a communication terminal to continue to receive a service provided in a mobile network even in a case in which the communication terminal is connected to a wireless LAN communication system within a mobile communication area in an environment in which wireless LAN communication areas are interspersed within the mobile communication area.

### Solution to Problem

A communication system according to a first aspect of the present invention includes a base station that forms a mobile communication area, an access point that forms a wireless LAN communication area within the mobile communication area, an access point managing device that manages a plurality of the access points, and an application server that provides an application service to a communication terminal located in the mobile communication area via the base station. In a case in which the communication terminal moves from an outside of the wireless LAN communication area within the mobile communication area into the wireless LAN communication area, the access point managing device establishes a data transmission path to the base station and relays data transmission between the base station and the communication terminal.

A base station according to a second aspect of the present invention includes, in a case in which a wireless LAN communication area is formed by an access point within a mobile communication area formed by the base station and a communication terminal to which an application service is provided from an application server via the base station moves from an outside of the wireless LAN communication area within the mobile communication area into the wireless LAN communication area, a communication unit that establishes a data transmission path between an access point managing device that manages the access point and the base station, and a processing unit that controls data associated with the application service to be transmitted to the communication terminal via the established data transmission path.

An access point managing device according to a third aspect of the present invention includes, in a case in which a wireless LAN communication area is formed by an access point within a mobile communication area formed by a base station and a communication terminal to which an application service is provided from an application server via the base station moves from an outside of the wireless LAN communication area within the mobile communication area into the wireless LAN communication area, a communication unit that establishes a data transmission path between the base station and the access point managing device, and a processing unit that relays, by using the data transmission path, data associated with the application service transmitted between the communication terminal and the base station.

A terminal according to a fourth aspect of the present invention includes a wireless LAN communication unit that receives an application service provided by an application server from an access point managing device via a data transmission path established between a base station and the access point managing device that manages an access point, in a case in which the terminal moves from an outside of a wireless LAN communication area formed by the access point into the wireless LAN communication area within a mobile communication area formed by the base station.

A communication method according to a fifth aspect of the present invention includes, in a case in which a wireless LAN communication area is formed by an access point within a mobile communication area formed by a base station and a communication terminal to which an application service is provided from an application server via the base station moves from an outside of the wireless LAN communication area into the wireless LAN communication area within the mobile communication area, establishing a data transmission path between an access point managing device that manages the access point and the base station, and transmitting data associated with the application service to the communication terminal via the established data transmission path.

A relay method according to a sixth aspect of the present invention includes, in a case in which a wireless LAN communication area is formed by an access point within a mobile communication area formed by a base station and a communication terminal to which an application service is provided from an application server via the base station moves from an outside of the wireless LAN communication area into the wireless LAN communication area within the mobile communication area, establishing a data transmission path between the base station and the access point, and relaying, by using the data transmission path, data associated with the application service transmitted between the communication terminal and the base station.

A program according to a seventh aspect of the present invention causes a computer to execute, in a case in which a wireless LAN communication area is formed by an access point within a mobile communication area formed by a base station and a communication terminal to which an application service is provided from an application server via the base station moves from an outside of the wireless LAN communication area into the wireless LAN communication area within the mobile communication area, establishing a data transmission path between an access point managing device that manages the access point and the base station, and transmitting data associated with the application service to the communication terminal via the established data transmission path. Advantageous Effects of Invention

The present invention can provide a communication system, a base station, an access point managing device, a terminal, a communication method, a relay method, and a program that enable a communication terminal to continue to receive a service provided in a mobile network even in a case in which the communication terminal connects to a wireless LAN communication system within a mobile communication area in an environment in which wireless LAN communication areas are interspersed within the mobile communication area.

### Brief Description of the Drawings

Fig. 1 is a configuration diagram of a communication system according to Embodiment 1.
Fig. 2 is a configuration diagram of a communication system according to Embodiment 2.
Fig. 3 is a configuration diagram of an eNB according to Embodiment 2.
Fig. 4 is a configuration diagram of a UE according to Embodiment 2.
Fig. 5 is a configuration diagram of a TWAN configuring device according to Embodiment 2.
Fig. 6 illustrates a flow of a handover process of a UE according to Embodiment 2.
Fig. 7 illustrates a flow of a handover process of a UE according to Embodiment 2.
Fig. 8 illustrates a flow of a handover process of a UE according to Embodiment 3.
Fig. 9 illustrates a flow of a handover process of a UE according to Embodiment 4.
Fig. 10 illustrates a flow of a handover process of a UE according to Embodiment 5.
Fig. 11 illustrates a flow of a handover process of a UE according to Embodiment 5.
Fig. 12 is a configuration diagram of a communication system according to Embodiment 1.

### Description of Embodiments

### Embodiment 1

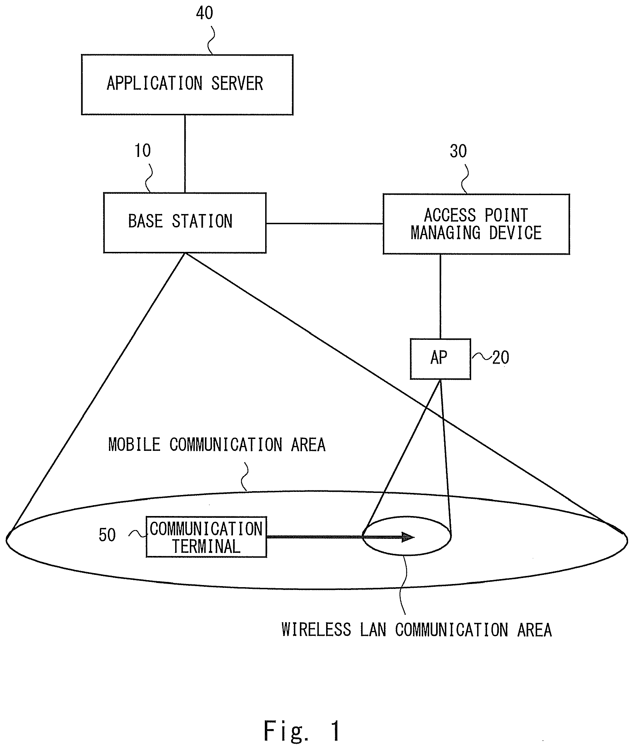

Hereinafter, embodiments of the present invention will be described with reference to the drawings. First, a configuration example of a communication system according to Embodiment 1 of the present invention will be described with reference to Fig. 1. The communication system illustrated in Fig. 1 includes a base station 10, an access point 20, an access point managing device 30, an application server 40, and a communication terminal 50.

The base station 10 forms a mobile communication area. The mobile communication area is a communication area formed by cells or sectors. The communication terminal 50 located in the mobile communication area formed by the base station 10 may communicate with the base station 10 by using, for example, LTE (Long Term Evolution), which is a wireless communication standard defined by 3GPP (3rd Generation Partnership Project).

The access point 20 forms a wireless LAN communication area within the mobile communication area. The communication terminal 50 located in the wireless LAN communication area communicates with the access point 20 by using wireless LAN communication, which is a wireless communication standard defined by IEEE (The Institute of Electrical and Electronics Engineers) 802 and so on. The wireless LAN communication area is formed so as to overlap part of the mobile communication area. Although Fig. 1 shows that a single wireless LAN communication area is formed within the mobile communication area, a plurality of wireless LAN communication areas may be formed within the mobile communication area.

The access point managing device 30 manages a plurality of access points 20. In other words, the access point managing device 30 integrates a plurality of access points 20. The access point managing device 30 may carry out an authentication process and so on of the communication terminal 50 located within the wireless LAN communication area formed by the access point 20.

The application server 40 provides an application service to the communication terminal 50 located in the mobile communication area formed by the base station 10 via the base station 10. For example, the application server 40 may provide a video distribution service or the like to the communication terminal 50.

The communication terminal 50 may be a cellular phone terminal, a smartphone, a computer device having a communication function, or the like. The communication terminal 50 has a function of wirelessly communicating with the base station 10 and the access point 20.

Now, an operation carried out when the communication terminal 50 moves from the outside of the wireless LAN communication area within the mobile communication area into the wireless LAN communication area will be described. In this case, the access point managing device 30 establishes a data transmission path to the base station 10. As the data transmission path is established between the access point managing device 30 and the base station 10, the base station 10 transmits data addressed to the communication terminal 50 to the access point managing device 30. In addition, the access point managing device 30 transmits, to the base station 10 the data transmitted from the communication terminal 50 via the access point 20. In other words, the access point managing device 30 relays the data transmission between the base station 10 and the access point 20.

As described thus far, the use of the communication system illustrated in Fig. 1 enables the communication terminal 50 to communicate with the base station 10 via the access point 20 and the access point managing device 30 even in a case in which the communication terminal 50 has moved from the outside of the wireless LAN communication area within the mobile communication area into the wireless LAN communication area. Thus, the communication terminal 50 can continue to receive the service that utilizes the application server 40 even in a case in which the communication terminal 50 moves from the outside of the wireless LAN communication area within the mobile communication area into the wireless LAN communication area in a state in which the communication terminal 50 is receiving the service that utilizes the application server 40 outside the wireless LAN communication area within the mobile communication area.

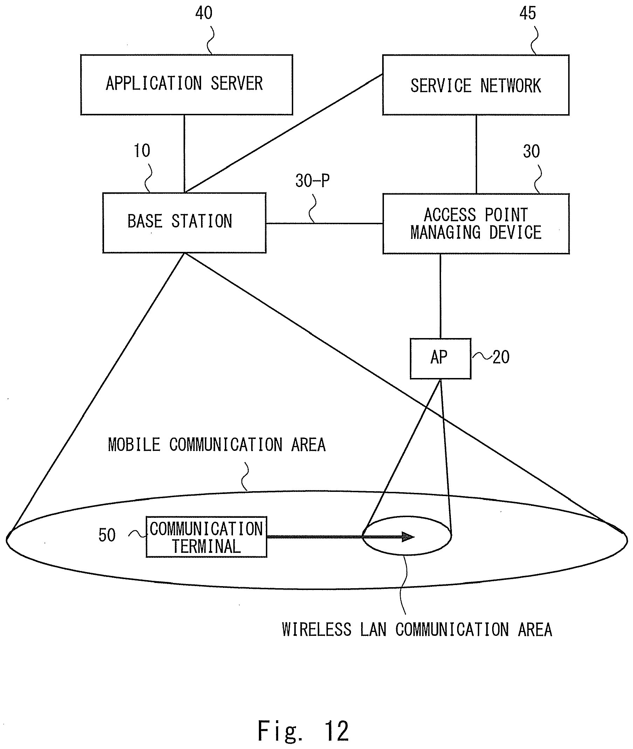

Next, a configuration example of a communication system according to Embodiment 1 of the present invention will be further described with reference to Fig. 12. The communication system illustrated in Fig. 12 further includes a service network 45. In addition, the access point 20 is an access point (AP) for a wireless LAN. For example, the application server 40 may provide a video distribution service or the like to the communication terminal 50. The application server 40 can be regarded as a MEC server. Meanwhile, the service network 45 is a network which the communication terminal 50 can access from the mobile communication area and the wireless LAN communication area. The service network 45 may, for example, be a PDN (Packet Data Network), the Internet, or the like.

Now, an operation carried out when the communication terminal 50 has moved from the outside of the wireless LAN communication area within the mobile communication area into the wireless LAN communication area will be described. In this case, the access point managing device 30 establishes a data transmission path 30-P to the base station 10. As the data transmission path 30-P is established between the access point managing device 30 and the base station 10, the base station 10 transmits data addressed to the communication terminal 50 to the access point managing device 30. The data transmission path 30-P may be a logical connection, a physical connection, or a wireless connection. An X2 interface, which is an inter-base station interface defined by the 3GPP standards, can also be applied to the data transmission path 30-P. In addition, the access point managing device 30 transmits, to the base station 10, the data transmitted from the communication terminal 50 via the access point 20. The access point managing device 30 communicates with the application server 40 via the base station 10. In other words, the application server 40 provides an application service to the communication terminal 50 via the base station 10, the access point managing device 30, and the access point 20.

As described thus far, the access point managing device 30 can establish the data transmission path 30-P to the base station 10 with which the communication terminal 50 has been in communication. Therefore, the communication terminal 50 can communicate with the base station 10 via the access point 20 and the access point managing device 30 even in a case in which the communication terminal 50 moves from the outside of the wireless LAN communication area within the mobile communication area into the wireless LAN communication area. Thus, the communication terminal 50 can continue to receive the application service that utilizes the application server 40 even in a case in which the communication terminal 50 moves from the outside of the wireless LAN communication area within the mobile communication area into the wireless LAN communication area in a state in which the communication terminal 50 is receiving the service that utilizes the application server 40 outside the wireless LAN communication area within the mobile communication area.

### Embodiment 2

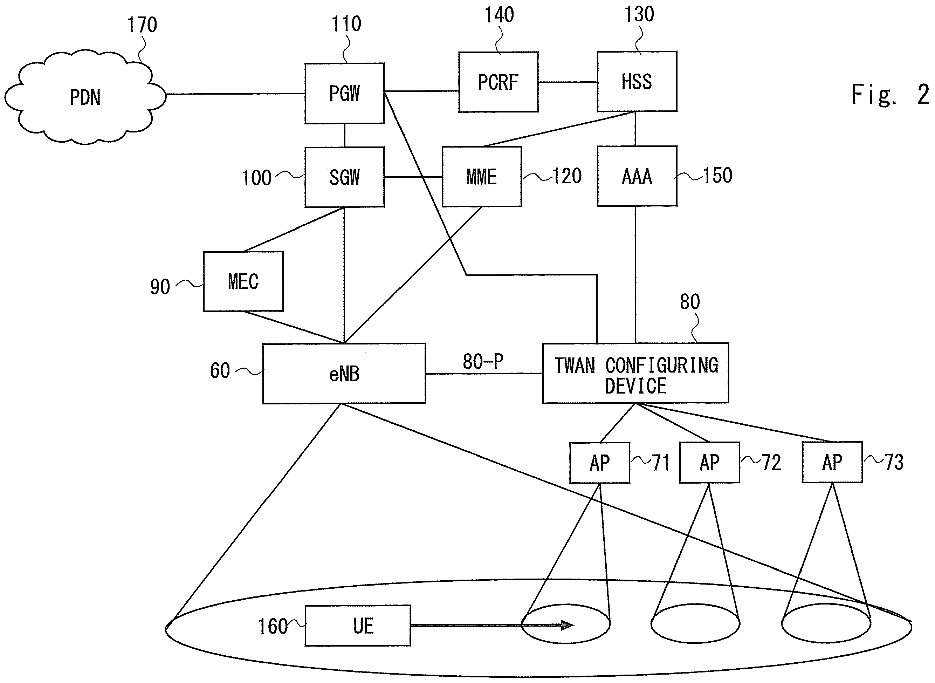

Subsequently, a configuration example of a communication system according to Embodiment 2 of the present invention will be described with reference to Fig. 2. The communication system illustrated in Fig. 2 is constituted by node devices of which the operations are defined by 3GPP. The communication system illustrated in Fig. 2 includes an eNB (evolved Node B) 60, APs (Access Point) 71 to 73, a TWAN (Trusted Wireless Access Network) configuring device 80, a MEC 90, an SGW (Serving Gateway) 100, a PGW (Packet Data Network Gateway) 110, an MME (Mobility Management Entity) 120, an HSS (Home Subscriber Server) 130, a PCRF (Policy and Charging Rules Function) 140, an AAA (Authentication Authorization Accounting) 150, a UE (User Equipment) 160, and a PDN (Packet Data Network) 170.

The eNB 60 corresponds to the base station 10 illustrated in Fig. 1. The APs 71 to 73 correspond to the access point 20 illustrated in Fig. 1. The TWAN configuring device 80 corresponds to the access point managing device 30 illustrated in Fig. 1. The MEC 90 corresponds to the application server 40 illustrated in Fig. 1. The UE 160 corresponds to the communication terminal 50 illustrated in Fig. 1.

The eNB 60 is a base station that can use, as a wireless communication mode, LTE defined by 3GPP. The MME 120 carries out call process control pertaining to the UE 160 located within a mobile communication area formed by the eNB 60. A control message transmitted in the call process control may be referred to as C-Plane (Control Plane) data. The SGW 100 and the PGW 110 are devices that transmit user data pertaining to the UE 160. The user data may be referred to as U-Plane (User Plane) data.

The HSS 130 is a server device that stores subscriber data pertaining to a subscriber who has entered a contract with a mobile communication service provider. The PCRF 140 is a device that controls the policy and so on pertaining to the charging or the QoS in the mobile network. The PDN 170 is a network different from the mobile network managed by the mobile communication service provider. The PDN 170 may be a network managed by another communication service provider or may be what is called the Internet.

The TWAN configuring device 80 is a device that manages a plurality of APs (APs 71 to 73). For example, the TWAN configuring device 80 carries out, by using the AAA 150, an authentication process or the like of the UE 160 located within the wireless LAN communication areas formed by the APs 71 to 73. In addition, the TWAN configuring device 80 relays the user data transmitted between the eNB 60 and the UE 160 located within the wireless LAN communication areas formed by the APs 71 to 73.

In addition, the TWAN configuring device 80 establishes a data transmission path 80-P to the eNB 60 with which the UE 160 has been in communication in a case in which the UE 160 has moved into the wireless LAN communication areas formed by the APs 71 to 73.

The UE 160 is a collective term for mobile communication terminals, such as a cellular phone terminal and a smartphone, used in 3GPP.

Fig. 2 indicates that the wireless LAN communication areas formed by the AP 71, the AP 72, and the AP 73 are included in the mobile communication area formed by the eNB 60. Therefore, when the UE 160 moves within the mobile communication area, the UE 160 may move so as to pass through a wireless LAN communication area. In other words, when moving within the mobile communication area, the UE 160 may move so as to cross over a wireless LAN communication area.

In addition, when moving within the mobile communication area, the UE 160 may enter a wireless LAN communication area. In some cases, the UE 160 may move so as to pass through a wireless LAN communication area.

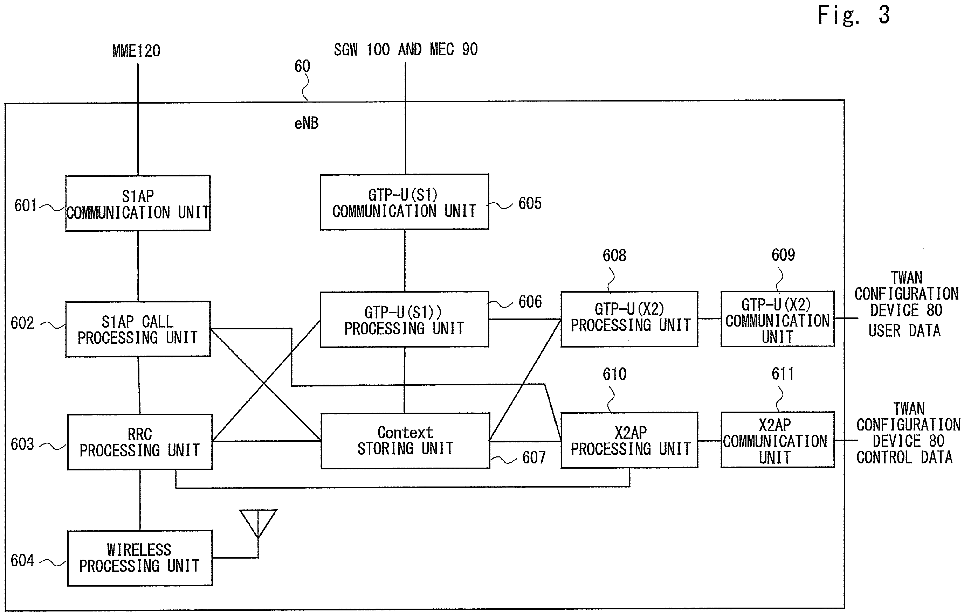

Subsequently, a configuration example of the eNB 60 according to Embodiment 2 of the present invention will be described with reference to Fig. 3. The eNB 60 includes an S1AP communication unit 601, an S1AP call processing unit 602, an RRC (Radio Resource Control) processing unit 603, a wireless processing unit 604, a GTP (General Packet Radio Service Tunneling Protocol)-U (S1) communication unit 605, a GTP-U (S1) processing unit 606, a Context storing unit 607, a GTP-U (X2) processing unit 608, a GTP-U (X2) communication unit 609, an X2AP processing unit 610, and an X2AP communication unit 611.

The eNB 60 may be a computer device that operates as a processor executes a program stored in a memory. In addition, the constituent elements constituting the eNB 60 may be software or modules of which processing is executed as a processor executes a program stored in a memory. Furthermore, the constituent elements constituting the eNB 60 may be constituted by circuits.

The S1AP communication unit 601 is used as an interface when communicating with the MME 120. The S1AP call processing unit 602 executes a call process between the S1AP call processing unit 602 and the MME 120 by using information stored in the Context storing unit 607.

The S1AP call processing unit 602 transmits and receives a message pertaining to the call process to and from the MME 120 via the S1AP communication unit 601. In addition, the S1AP call processing unit 602 selects an MME with which the S1AP call processing unit 602 carries out a call process by using information stored in the Context storing unit 607.

The RRC (Radio Resource Control) processing unit 603 executes a process pertaining to an RRC protocol used between the RRC processing unit 603 and the UE 160. For example, the RRC processing unit 603 may execute a process of managing the state of connection with the UE 160. The wireless processing unit 604 is used as an interface when wirelessly communicating with the UE 160.

The GTP-U (S1) communication unit 605 is used as an interface when communicating with the SGW 100. The GTP-U (S1) processing unit 606 transmits and receives user data to and from the SGW 100 via the GTP-U (S1) communication unit 605.

Alternatively, the GTP-U (S1) communication unit 605 is used as an interface when communicating with the MEC 90, and the GTP-U (S1) processing unit 606 transmits and receives user data to and from the MEC 90 via the GTP-U (S1) communication unit 605.

The Context storing unit 607 stores information on the MME to be connected to when the call process pertaining to the UE 160 transmitted from the MME 120 is carried out. In addition, the Context storing unit 607 may store connection information and so on to the TWAN configuring device 80 necessary for establishing the X2 connection to the TWAN configuring device 80. The connection information to the TWAN configuring device 80 may, for example, be the IP address or the like of the TWAN configuring device 80.

The GTP-U (X2) communication unit 609 is used as an interface when communicating with the TWAN configuring device 80. The GTP-U (X2) processing unit 608 transmits and receives user data to and from the TWAN configuring device 80 via the GTP-U (X2) communication unit 609.

The X2AP communication unit 611 is used as an interface when communicating with the TWAN configuring device 80. The X2AP processing unit 610 transmits and receives control data to and from the TWAN configuring device 80 via the X2AP communication unit 611.

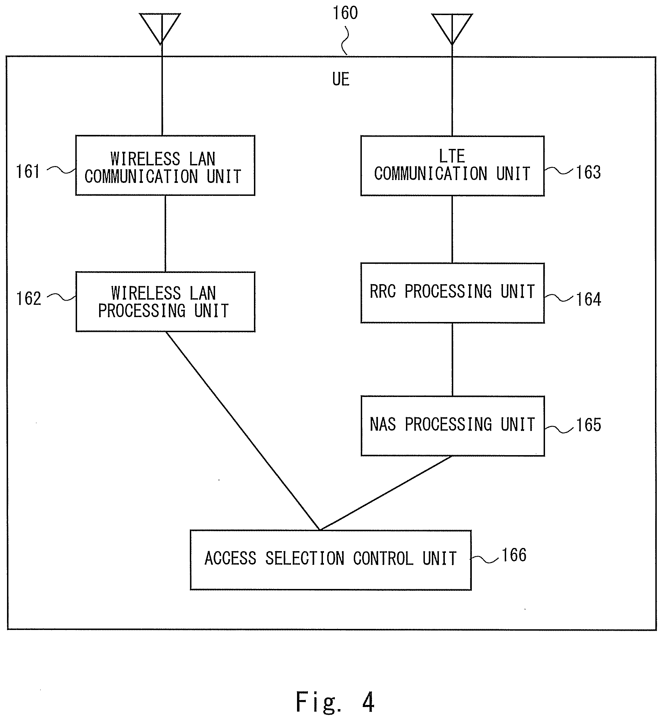

Subsequently, a configuration example of the UE 160 according to Embodiment 2 of the present invention will be described with reference to Fig. 4. The UE 160 includes a wireless LAN communication unit 161, a wireless LAN processing unit 162, an LTE communication unit 163, an RRC processing unit 164, a NAS (Non Access Stratum) processing unit 165, and an access selection control unit 166.

The wireless LAN communication unit 161 is used as an interface when communicating with the TWAN configuring device 80 via any one of the APs 71 to 73. The wireless LAN processing unit 162 transmits and receives data to and from the TWAN configuring device 80 via the wireless LAN communication unit 161.

The LTE communication unit 163 is used as an interface when communicating with the eNB 60. The RRC processing unit 164 carries out communication that uses the RRC protocol between the RRC processing unit 164 and the eNB 60. The RRC processing unit 164 carries out communication that uses the RRC processing unit via the LTE communication unit 163. The NAS processing unit 165 carries out a process pertaining to a NAS message used in the communication between the NAS processing unit 165 and the MME 120. The NAS processing unit 165 transmits the NAS message to the eNB 60 via the LTE communication unit 163.

The access selection control unit 166 selects whether to communicate with the eNB 60 or to communicate with the TWAN configuring device 80 in accordance with an instruction message transmitted from the eNB 60 or the TWAN configuring device 80 or in accordance with the radio wave intensity of the LTE and the wireless LAN. When the access selection control unit 166 has selected to communicate with the TWAN configuring device 80, the access selection control unit 166 issues an instruction to execute a communication process to the wireless LAN processing unit 162. When the access selection control unit 166 has selected to communicate with the eNB 60, the access selection control unit 166 issues an instruction to execute a communication process to the RRC processing unit 164 and the NAS processing unit 165.

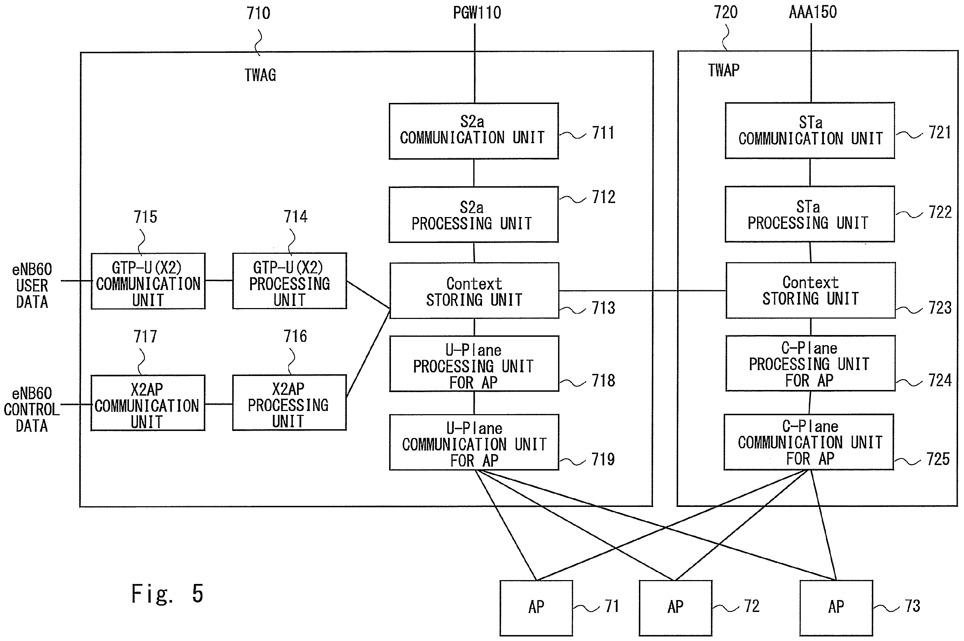

Subsequently, a configuration example of the TWAN configuring device 80 according to Embodiment 2 of the present invention will be described with reference to Fig. 5. The TWAN configuring device 80 includes a TWAG (Trusted WLAN Access Gateway) 710 and a TWAP (Trusted WLAN AAA Proxy) 720. The TWAG 710 and the TWAP 720 may be different devices or may be configured as identical devices. The TWAG 710 includes an S2a communication unit 711, an S2a processing unit 712, a Context storing unit 713, a GTP-U (X2) processing unit 714, a GTP-U (X2) communication unit 715, an X2AP processing unit 716, an X2AP communication unit 717, a U-Plane processing unit 718 for AP and a U-Plane communication unit 719 for AP.

The Context storing unit 713 stores information pertaining to the eNB and the PGW that the TWAG 710 selects as a connection destination in the communication pertaining to the UE 160.

The S2a communication unit 711 is used as an interface when communicating with the PGW 110. The S2a processing unit 712 transmits and receives user data to and from the PGW 110 via the S2a communication unit 711. For example, when the TWAG 710 does not receive a service that utilizes the MEC 90 via the eNB 60, the TWAG 710 communicates with the PGW 110 via the S2a communication unit 711.

The GTP-U (X2) communication unit 715 is used as an interface when communicating with the eNB 60. The GTP-U (X2) processing unit 714 transmits and receives user data to and from the eNB 60 via the GTP-U (X2) communication unit 715.

The X2AP communication unit 717 is used as an interface when communicating with the eNB 60. The X2AP processing unit 716 transmits and receives control data to and from the eNB 60 via the X2AP communication unit 717 in order to establish a data transmission path.

For example, when the TWAG 710 receives a service that utilizes the MEC 90 via the eNB 60, the TWAG 710 communicates with the eNB 60 via the GTP-U (X2) communication unit 715 and the X2AP communication unit 717.

In other words, the TWAG 710 communicates with the eNB 60 via the GTP-U (X2) communication unit 715 and the X2AP communication unit 717 in a case in which the UE 160 moves into the wireless LAN communication areas formed by the APs 71 to 73 and continues to receive the service that utilizes the MEC 90 via the eNB 60.

The U-Plane communication unit 719 for AP is used as an interface for communicating with the APs 71 to 73. The U-Plane processing unit 718 for AP transmits and receives user data to and from the APs 71 to 73 via the U-Plane communication unit 719 for AP.

For example, the U-Plane communication unit 719 for AP receives user data transmitted from the UE 160 via the AP 71. The U-Plane communication unit 719 for AP outputs the received user data to the U-Plane processing unit 718 for AP.

Subsequently, a configuration example of the TWAP 720 will be described. The TWAP 720 includes an STa communication unit 721, an STa processing unit 722, a Context storing unit 723, a C-Plane processing unit 724 for AP, and a C-Plane communication unit 725 for AP.

The STa communication unit 721 is used as an interface for communicating with the AAA 150. The STa processing unit 722 transmits and receives data for carrying out an authentication process to and from the AAA 150 via the STa communication unit 721.

The Context storing unit 723 stores information pertaining to the AAA 150 on which the STa processing unit 722 carries out an authentication process. In addition, the Context storing unit 723 cooperates with the Context storing unit 713 and shares information and so on pertaining to a path for transmitting data pertaining to the UE 160.

Alternatively, the Context storing unit 723 cooperates with the Context storing unit 713 and shares information pertaining to the authentication result of the UE 160 executed in the AAA 150.

The C-Plane communication unit 725 for AP is used as an interface for communicating with the APs 71 to 73. The C-Plane processing unit 724 for AP transmits and receives control data to and from the APs 71 to 73 via the C-Plane communication unit 725 for AP.

For example, the C-Plane communication unit 725 for AP receives data necessary for carrying out authentication transmitted from the UE 160 via the AP 71. The data necessary for carrying out the authentication may, for example, be the identification information or the like of the UE 160. The C-Plane processing unit 724 for AP outputs, to the Context storing unit 723, the data pertaining to the authentication received via the C-Plane communication unit 725 for AP.

In addition, the C-Plane processing unit 724 for AP transmits the information pertaining to the result of the authentication process of the UE 160 executed in the AAA 150 to the AP 71 via the C-Plane communication unit 725 for AP.

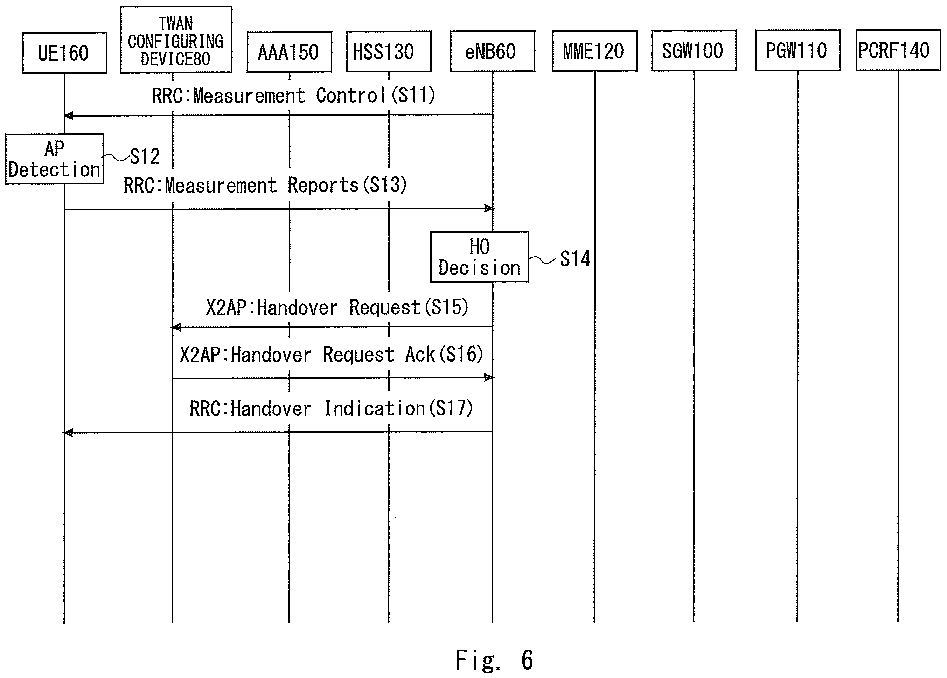

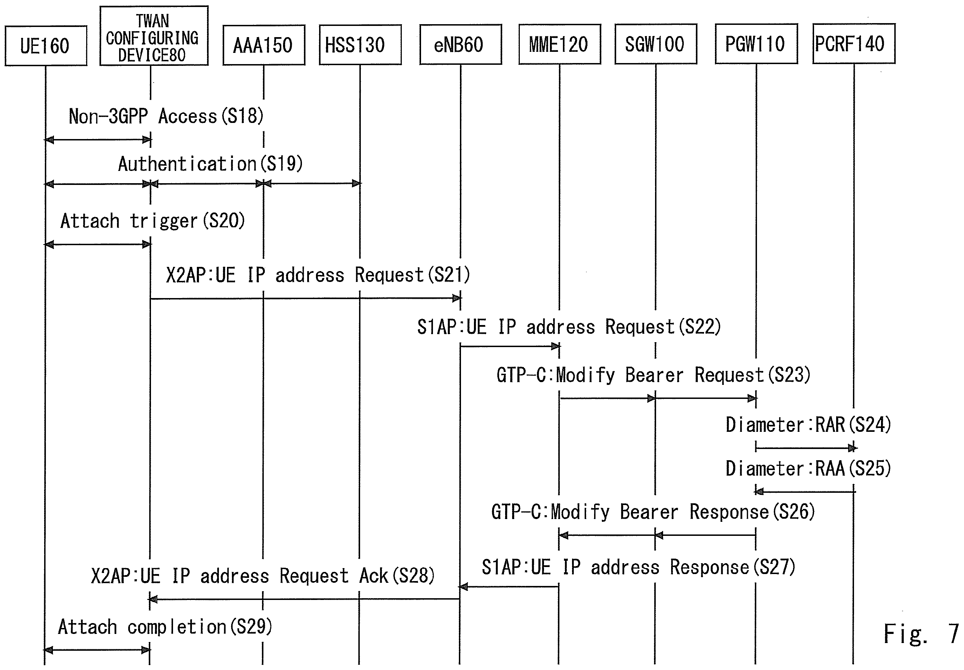

Subsequently, a flow of a handover process of the UE 160 according to Embodiment 2 of the present invention will be described with reference to Fig. 6 and Fig. 7. In Fig. 6 and Fig. 7, an operation carried out when the UE 160 moves from the outside of the wireless LAN communication area formed by the AP 71 within the mobile communication area into the wireless LAN communication area formed by the AP 71 will be described.

First, the eNB 60 transmits an RRC: Measurement Control message to the UE 160 in order to instruct the UE 160 to measure the wireless intensity (S11). The wireless intensity may be referred to, for example, as a signal intensity, a radio wave intensity, an electric field intensity, or the like. The eNB 60 sets, in the RRC: Measurement Control message, the content instructing the UE 160 to measure the wireless intensity of a wireless signal that the eNB located around the UE 160 transmits through the LTE communication as well as the wireless intensity of a wireless signal that the AP transmits through the wireless LAN communication.

Next, the UE 160 detects a wireless signal transmitted from the AP 71 (S12). The UE 160 then transmits, to the eNB 60, an RRC: Measurement Report message in which information that associates the wireless intensity of the detected wireless signal with the identification information of the base station or the AP 71 is set (S13). For example, the UE 160 may set, in the RRC: Measurement Report message, the wireless intensity of the wireless signal transmitted from the AP 71, which has been detected in step S12, and an SSID (Service set identification) or a BSSID (Basic service set identification) notified from the AP 71.

Here, the UE 160 may set only the information pertaining to the AP specified by the eNB 60 into the RRC: Measurement Report message so that not the information pertaining to all the detected APs is transmitted to the eNB 60. For example, the eNB 60 may distribute the information pertaining to an AP with which the eNB 60 can establish a connection as notification information or the like. When the UE 160 has detected wireless signals pertaining to a plurality of APs, the UE 160 may transmit, to the eNB 60, information pertaining only to the AP specified in the notification information or the like distributed from the eNB 60.

In other words, when the UE 160 has detected a plurality of APs in step S12, the UE 160 may be controlled so as not to transmit information pertaining to all the detected APs to the eNB 60. For example, the UE 160 may set only the information pertaining to the AP specified by the eNB 60 into the RRC: Measurement Report message.

Next, the eNB 60 decides to hand over the UE 160 to the AP 71 under the TWAN configuring device 80 on the basis of the information set in the RRC: Measurement Report message (S14). Here, the eNB 60 decides to hand over the UE 160 to the TWAN configuring device 80 in a case in which the eNB 60 can establish a connection with the TWAN configuring device 80. In other words, the eNB 60 does not need to hand over the UE 160 to the AP 71 under the TWAN configuring device 80 in a case in which the eNB 60 cannot establish a connection with the TWAN configuring device 80.

Next, the eNB 60 transmits an X2AP: Handover Request message to the TWAN configuring device 80 on the basis of the information necessary for connecting to the TWAN configuring device 80 stored in the Context storing unit 607 (S15). When the UE 160 connects to the TWAN configuring device 80, the TWAN configuring device 80 needs to determine whether the X2 connection set between the TWAN configuring device 80 and the eNB 60 is compatible with the UE 160. Therefore, the eNB 60 sets, in the X2AP: Handover Request message, the identification information of the X2 connection set in association with the handover of the UE 160. The interface between the TWAN configuring device 80 and the eNB 60 is defined as an X2 interface in 3GPP. The identification information of the X2 connection may be path information set via the X2 interface between the TWAN configuring device 80 and the eNB 60.

Furthermore, the eNB 60 sets, in the X2AP: Handover Request message, a TEID (Tunnel Endpoint Identifier) of the eNB 60 (hereinafter, referred to as eNB UL TEID) specified when the TWAN configuring device 80 transmits data to the eNB 60.

Furthermore, the eNB 60 sets, in the X2AP: Handover Request message, security information for generating key information used for encryption or decryption, for example. The security information may be included, for example, in AS Security Information in the X2AP: Handover Request message.

The TWAN configuring device 80 may carry out a confidentiality process defined by IEEE 802.1x by using the security information transmitted from the eNB 60 or may carry out a confidentiality process defined by IEEE 802.1x without using the security information. In addition, the TWAN configuring device 80 transmits, to the eNB 60, the security information set in the X2AP: Handover Request message in a case in which the UE 160 moves out of the wireless LAN communication area within the mobile communication area.

Next, the TWAN configuring device 80 transmits, to the eNB 60, an X2AP: Handover Request Ack message as a response to the X2AP: Handover Request message (S16). The TWAN configuring device 80 sets, in the X2AP: Handover Request Ack message, a TEID of the TWAN configuring device 80 (hereinafter, referred to as TWAN DL TEID) specified when the eNB 60 transmits data to the TWAN configuring device 80. As the TWAN configuring device 80 transmits the X2AP: Handover Request Ack message to the eNB 60, the X2 connection is established between the TWAN configuring device 80 and the eNB 60.

Next, the eNB 60 transmits an RRC: Handover Indication message to the UE 160 in order to instruct the UE 160 to start connecting to the AP 71 managed by the TWAN configuring device 80 (S17). The eNB 60 may set the identification information of the X2 connection into the RRC: Handover Indication message.

Subsequently, referring to Fig. 7, the UE 160 starts a connection process (Non-3GPP Access) to the TWAN configuring device 80 (S18). Next, an authentication process is executed between the UE 160 and the TWAN configuring device 80, between the TWAN configuring device 80 and the AAA 150, and between the AAA 150 and the HSS 130 (S19).

Next, the UE 160 starts an Attach process (Attach trigger) between the UE 160 and the TWAN configuring device 80 (S20). The UE 160 may transmit, to the TWAN configuring device 80, the identification information of the X2 connection acquired in the RRC: Handover Indication message in step S17 at a point between steps S18 and S20 in order to indicate that the UE 160 has moved from the mobile communication area into the wireless LAN communication area formed by the AP 71.

For example, the UE 160 may set the identification information of the X2 connection into an EAP (Extensible Authentication Protocol) payload transmitted at the time of the authentication process in step S19. Alternatively, the UE 160 may set the identification information of the X2 connection into a DHCP (Dynamic Host Configuration Protocol) message that the UE 160 transmits in order to acquire the IP address at a point between steps S18 and S20.

Next, when the TWAN configuring device 80 determines that the UE 160 has moved from the mobile communication area formed by the eNB 60 into the wireless LAN communication area formed by the AP 71, the TWAN configuring device 80 transmits an X2AP: UE IP address Request message to the eNB 60 (S21).

The TWAN configuring device 80 sets, in the X2AP: UE IP address Request message, information indicating the wireless LAN as a RAT (Radio Access Technology) Type as well as an SSID and a BSSID. In addition, the TWAN configuring device 80 may set information indicating the wireless LAN as a RAT Type by applying an ECGI (E-UTRAN Cell Global ID). The ECGI is constituted by a PLMN (Public Land Mobile Network) ID and an ECI (E-UTRAN Cell Identity). Furthermore, the ECI is constituted by an eNB ID and a Cell ID.

In other words, the TWAN configuring device 80 may set the information indicating the wireless LAN as the RAT Type by using the ECGI (E-UTRAN Cell Global ID).

Next, the eNB 60 transmits an S1AP: UE IP address Request message to the MME 120 (S22). The eNB 60 sets, in the S1AP: UE IP address Request message, the information indicating the wireless LAN as the RAT Type as well as the SSID and the BSSID. In addition, the eNB 60 may set the information indicating the wireless LAN as the RAT Type by applying the ECGI.

In other words, the eNB 60 may set the information indicating the wireless LAN as the RAT Type by using the ECGI.

Next, the MME 120 transmits a GTP-C: Modify Bearer Request message to the SGW 100, and the SGW 100 transmits the GTP-C: Modify Bearer Request message to the PGW 110 (S23).

The MME 120 and the SGW 100 set, in the GTP-C: Modify Bearer Request message, the information indicating the wireless LAN as the RAT Type as well as the SSID and the BSSID. In addition, the MME 120 and the SGW 100 may set the RAT Type, the SSID, and the BSSID by using or extending ULI (User Location Information) IE.

Next, the PGW 110 transmits a Diameter: RAR (Re-Authentication Request) message to the PCRF 140 (S24). When the policy, the charging rule, or the like is to be modified in association with a change of the RAT Type to the wireless LAN, the PGW 110 transmits the Diameter RAR message to the PCRF 140. Therefore, when the policy, the charging rule, or the like does not need to be modified in association with a change of the RAT Type to the wireless LAN, the PGW 110 does not need to transmit the Diameter: RAR message to the PCRF 140.

Next, the PCRF 140 transmits, to the PGW 110, a Diameter: RAA (Re-Authentication Answer) message as a response to the Diameter: RAR message (S25). Next, the PGW 110 and the SGW 100 transmit, to the SGW 100 and the MME 120, a GTP-C: Modify Bearer Response message as a response to the GTP-C: Modify Bearer Request message (S26).

The IP address allocated to the UE 160 is set in PAA (PDN Address Allocation) IE in the GTP-C: Modify Bearer Response message. The IP address allocated to the UE 160 is the same as the IP address that the UE 160 has used to communicate with the eNB 60 outside the wireless LAN communication area within the mobile communication area formed by the eNB 60.

Next, the MME 120 transmits, to the eNB 60, an S1AP: UE IP address Response message as a response to the S1AP: UE IP address Request message (S27). The MME 120 sets, in the S1AP: UE IP address Response message, the IP address of the UE 160 set in the GTP-C: Modify Bearer Response message.

Next, the eNB 60 transmits, to the TWAN configuring device 80, an X2AP: UE IP address Request Ack message as a response to the X2AP: UE IP address Request message (S28). The eNB 60 sets, in the X2AP: UE IP address Request Ack message, the IP address of the UE 160 set in the S1AP: UE IP address Response message. Upon receiving the X2AP: UE IP address Request Ack message, the TWAN configuring device 80 executes a process for completing the Attach process between the TWAN configuring device 80 and the UE 160 (Attach completion) (S29). When completing the Attach process, the eNB 60 notifies the UE 160 of the IP address allocated to the UE 160.

As described thus far, with the use of the communication system according to Embodiment 2 of the present invention, a data transmission path is established between the eNB 60 and the TWAN configuring device 80 when the UE 160 is handed over from the mobile communication area formed by the eNB 60 to the wireless LAN communication area formed by the AP 71. Therefore, the UE 160 can continue to communicate with the eNB 60 even after the UE 160 is handed over to the wireless LAN communication area. Thus, the UE 160 can continue to receive the service provided by the MEC 90 via the eNB 60.

In addition, in Fig. 7, a process in which the PGW 110 assigns the IP address that the UE 160 has used in the mobile communication area as the IP address that the UE 160 will use in the wireless LAN communication area. Aside from the above, the IP address may be assigned, for example, by the HSS. Furthermore, the TWAN configuring device 80 may receive the information pertaining to the IP address used in the mobile communication area from the UE 160 or may receive the information pertaining to the IP address that the UE 160 has used in the mobile communication area from the eNB 60.

Furthermore, in Fig. 6, the eNB 60 may autonomously search for the TWAN configuring device 80 after step S14. In other words, the eNB 60 autonomously searches for the TWAN configuring device 80 in a case in which the eNB 60 does not have the information necessary for connecting to the TWAN configuring device 80 in advance. For example, a new interface is defined between the MME 120 and the TWAN configuring device 80, and the eNB 60 may acquire the information necessary for connecting to the TWAN configuring device 80, such as the IP address, via the newly defined interface. Alternatively, the HSS 130 may hold the information necessary for connecting to the TWAN configuring device 80, and the eNB 60 may acquire the information necessary for connecting to the TWAN configuring device 80 from the HSS 130.

### Embodiment 3

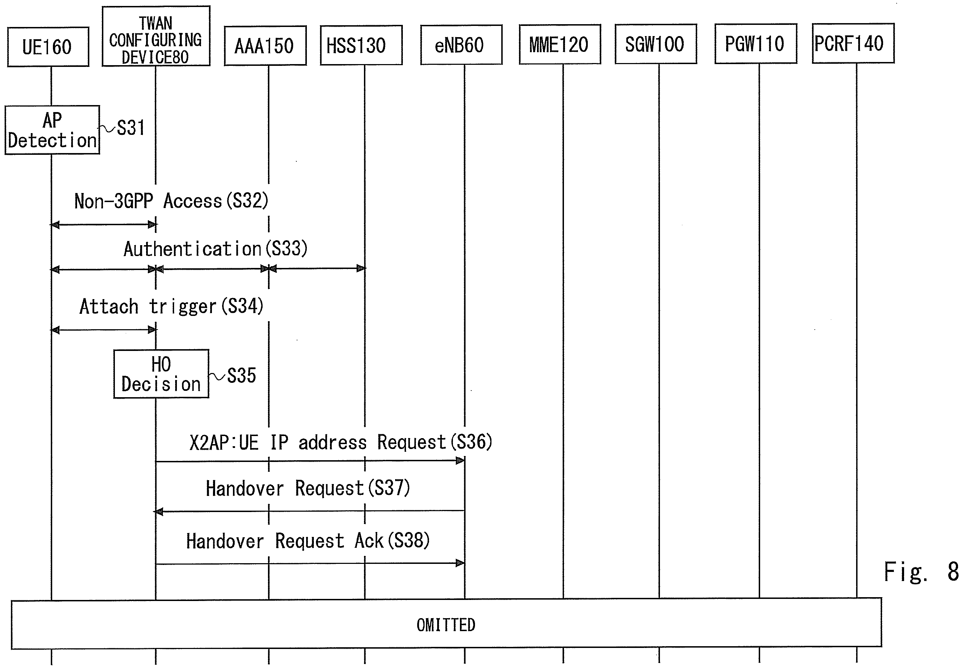

Subsequently, a flow of a handover process of the UE 160 according to Embodiment 3 of the present invention will be described with reference to Fig. 8.

In Fig. 8, an operation carried out when the UE 160 moves from the outside of the wireless LAN communication area formed by the AP 71 within the mobile communication area into the wireless LAN communication area formed by the AP 71 will be described.

First, the UE 160 detects a wireless signal transmitted from the AP (S31). Next, the UE 160 carries out a connection process to the TWAN configuring device 80 in steps S32 to S34 without receiving a message associated with a handover, such as the RRC: Handover Indication message transmitted from the eNB 60 in step S17 of Fig. 6. Steps S32 to S34 of Fig. 8 are similar to steps S18 to S20 of Fig. 7, and thus detailed descriptions thereof will be omitted.

Next, the TWAN configuring device 80 decides to hand over the UE 160 to the AP under the TWAN configuring device 80 (S35). Here, the TWAN configuring device 80 may cancel the connection with the UE 160 and refuse the connection with the UE 160 in a case in which the TWAN configuring device 80 cannot set a connection to the eNB 60. In other words, the TWAN configuring device 80 may switch the connection destination of the UE 160 back to the eNB 60 in a case in which the TWAN configuring device 80 cannot set the connection to the eNB 60. Alternatively, the TWAN configuring device 80 may set a connection to the PGW 110 in a case in which the TWAN configuring device 80 cannot set a connection to the eNB 60.

Next, the TWAN configuring device 80 transmits an X2AP: UE IP address Request message to the eNB 60, in a similar manner to step S21 of Fig. 7 (S36). Steps S37 and S38 are similar to steps S15 and S16 of Fig. 6, and thus detailed descriptions thereof will be omitted. Furthermore, the processes in steps S22 to S29 of Fig. 7 are executed after step S38. In Fig. 8, the description of the processes after step S38 is omitted.

As described thus far, the use of the communication system according to Embodiment 3 of the present invention enables the TWAN configuring device 80 to decide to execute the handover of the UE 160. Thus, the communication system according to Embodiment 3 can establish a data transmission path between the eNB 60 and the TWAN configuring device 80, in a similar manner to Embodiment 2.

Furthermore, as the TWAN configuring device 80 decides to execute the handover, the processing load of the eNB 60 is reduced as compared to Embodiment 2.

Furthermore, in Fig. 8, the TWAN configuring device 80 may autonomously search for the eNB 60 after step S35. In other words, the TWAN configuring device 80 autonomously searches for the eNB 60 in a case in which the TWAN configuring device 80 does not have the information necessary for connecting to the eNB 60 in advance. For example, a new interface is defined between the MME 120 and the TWAN configuring device 80, and the TWAN configuring device 80 may acquire the information necessary for connecting to the eNB 60, such as the IP address of the eNB 60, via the newly defined interface. Alternatively, the HSS 130 may hold the information necessary for connecting to the eNB 60, and the TWAN configuring device 80 may acquire the information necessary for connecting to the eNB 60 from the HSS 130.

### Embodiment 4

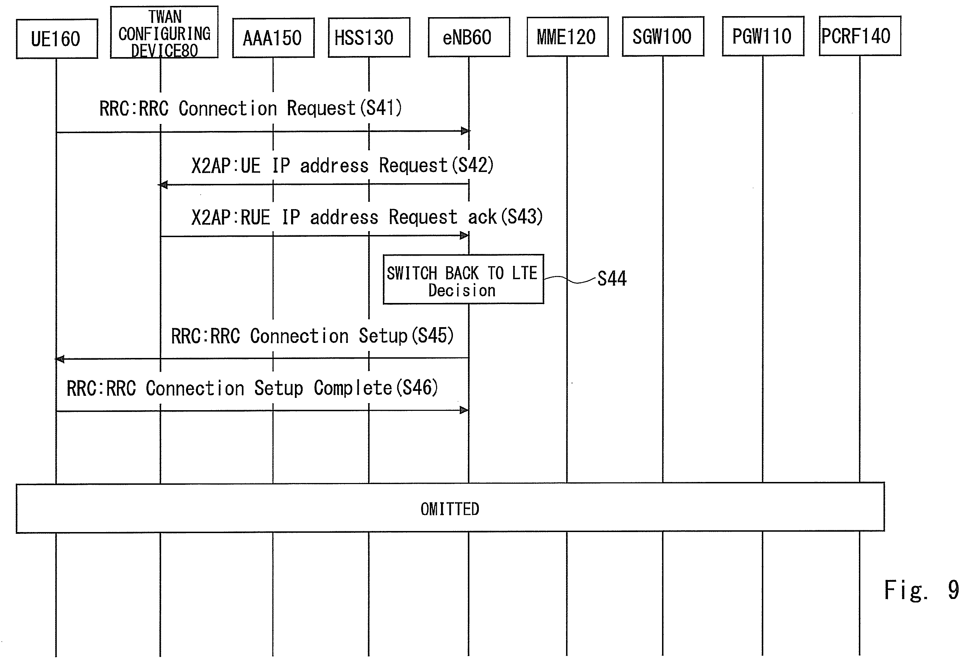

Subsequently, a flow of a handover process of the UE 160 according to Embodiment 4 of the present invention will be described with reference to Fig. 9. In the handover process illustrated in Fig. 9, a flow of the process carried out when the UE 160 moves from the inside of the wireless LAN communication area formed by the AP 71 to the outside of the wireless LAN communication area formed by the AP 71 within the mobile communication area will be described. In addition, in Fig. 9, the assumption is that the RRC connection between the UE 160 and the eNB 60 is released.

Specifically, in Fig. 9, the assumption is that the RRC connection between the UE 160 and the eNB 60 is being released when the UE 160 moves into the wireless LAN communication area formed by the AP 71.

The UE 160 transmits an RRC: RRC Connection Request message to the eNB 60 in a case in which the intensity of the wireless signal transmitted from the TWAN configuring device 80 falls below a predetermined threshold value and the intensity of the signal transmitted from the eNB 60 exceeds a predetermined threshold value (S41).

Next, the eNB 60 transmits an X2AP: UE IP address Request message to the TWAN configuring device 80 in order to connect the UE 160 to the eNB 60 (S42). Next, the TWAN configuring device 80 transmits, to the eNB 60, an X2AP: UE IP address Request Ack message as a response to the X2AP: UE IP address Request message (S43). Here, the TWAN configuring device 80 may set the received security information into the X2AP: UE IP address Request Ack message in a case in which the TWAN configuring device 80 has received the security information from the eNB 60 at the time when the UE 160 has been handed over to the TWAN configuring device 80. Next, the eNB 60 decides to switch the connection destination of the UE 160 from the TWAN configuring device 80 to the eNB 60 (S44).

Next, the eNB 60 transmits an RRC: RRC Connection Setup message to the UE 160 in order to set the RRC connection to the UE 160 (S45). Next, the UE 160 transmits, to the eNB 60, an RRC: RRC Connection Setup Complete message as a response to the RRC: RRC Connection Setup message (S46).

The processes in steps S22 to S29 of Fig. 7 are executed after step S46. In Fig. 9, the description of the processes after step S46 is omitted.

As described thus far, the use of the communication system according to Embodiment 4 of the present invention enables the UE 160 to be handed over from the TWAN configuring device 80 to the eNB 60. Thus, the UE 160 can receive the service that the UE 160 has been receiving from the MEC 90 via the TWAN configuring device 80 even after the handover via the eNB 60.

### Embodiment 5

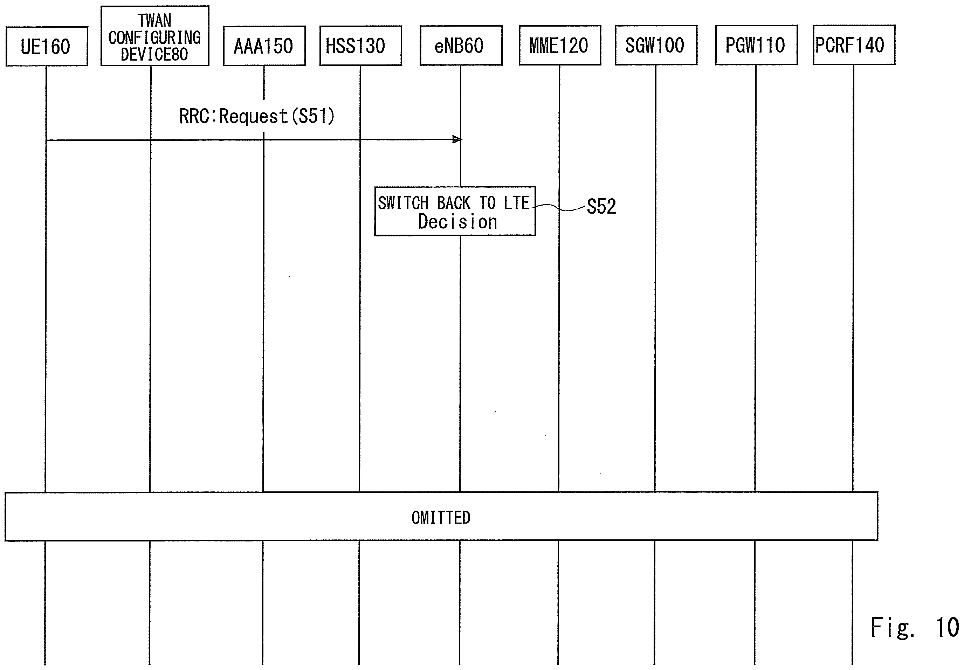

Subsequently, a flow of a handover process of the UE 160 according to Embodiment 5 of the present invention will be described with reference to Fig. 10. In the handover process illustrated in Fig. 10, a flow of the process carried out when the UE 160 moves from the inside of the wireless LAN communication area formed by the AP 71 to the outside of the wireless LAN communication area formed by the AP 71 within the mobile communication area will be described. In addition, in Fig. 10, the assumption is that the RRC connection between the UE 160 and the eNB 60 is retained.

Specifically, in Fig. 10, the assumption is that the RRC connection between the UE 160 and the eNB 60 is being retained even when the UE 160 moves into the wireless LAN communication area formed by the AP 71.

The UE 160 transmits a desired Request message that uses the RRC protocol to the eNB 60 in a case in which the intensity of the wireless signal transmitted from the TWAN configuring device 80 falls below a predetermined threshold value and the intensity of the signal transmitted from the eNB 60 exceeds a predetermined threshold value (S51). For example, the UE 160 may transmit an RRC: Measurement Reports message to the eNB 60.

Next, the eNB 60 decides to switch the connection destination of the UE 160 from the TWAN configuring device 80 to the eNB 60 (S52). The processes in steps S22 to S29 of Fig. 7 are executed after step S52. In Fig. 10, the description of the processes after step S52 is omitted. In addition, although the RRC: RRC Connection Setup message and the RRC: RRC Connection Setup Complete message are transmitted and received in Fig. 9, transmission and reception of the RRC: RRC Connection Setup message and the RRC: RRC Connection Setup Complete message are not necessary in Fig. 10 since the RRC connection between the UE 160 and the eNB 60 is retained.

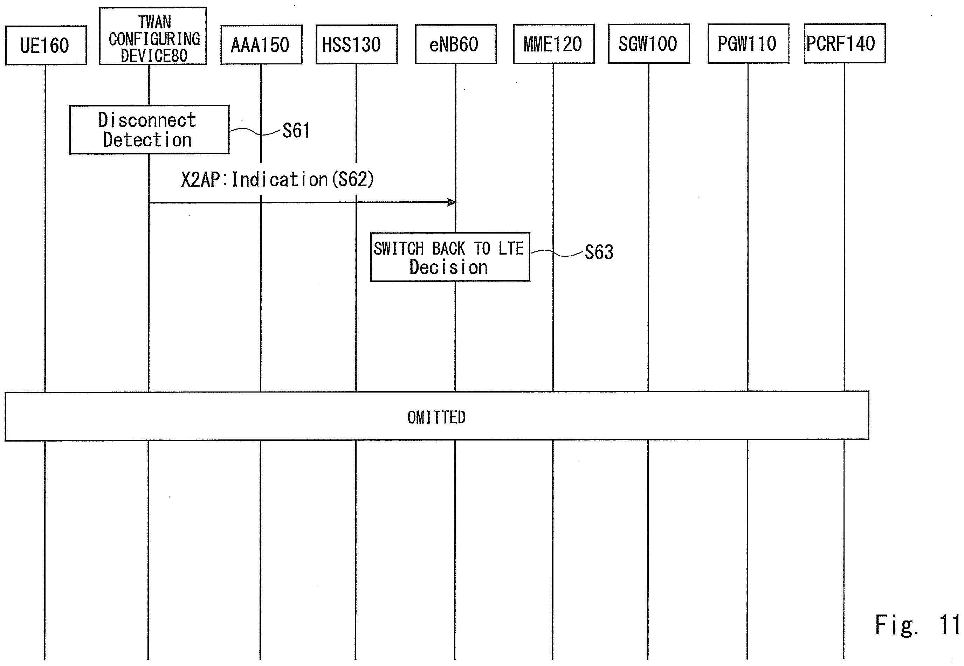

Next, a flow of a handover process of the UE 160 according to Embodiment 5 of the present invention will be described with reference to Fig. 11, in which the description is on the difference from the flow illustrated in Fig. 10. In Fig. 11, unlike Fig. 10, the TWAN configuring device 80 transmits, to the eNB 60, a signal that serves as a trigger for a switching process in the eNB 60.

First, the TWAN configuring device 80 determines that the connection between the AP 71 and the UE 160 is disconnected on the basis of the movement of the UE 160 to the outside of the wireless LAN communication area (S61). Next, upon determining that the connection between the AP 71 and the UE 160 has been disconnected, the TWAN configuring device 80 transmits an X2AP: Indication message to the eNB 60 (S62). Next, the eNB 60 decides to switch the connection destination of the UE 160 from the TWAN configuring device 80 to the eNB 60 (S63). The processes in steps S22 to S29 of Fig. 7 are executed after step S63. In Fig. 11, the description of the processes after step S63 is omitted.

As described thus far, the use of the communication system according to Embodiment 5 of the present invention enables the UE 160 to be handed over from the TWAN configuring device 80 to the eNB 60. Thus, the UE 160 can receive the service that the UE 160 has been receiving from the MEC 90 via the TWAN configuring device 80 even after the handover via the eNB 60. In addition, in the processes illustrated in Fig. 10 and Fig. 11, the communication is carried out by using the RRC connection retained between the UE 160 and the eNB 60, and thus the number of signals can be reduced, as compared to the process illustrated in Fig. 9.

Although the present invention has been described as a configuration of hardware in the above embodiments, the present invention is not limited thereto. The present invention can also be implemented by causing a CPU (Central Processing Unit) to execute a computer program to implement the processes of the communication terminal (e.g., UE), the base station 10 (e.g., eNB), and the access point managing device 30 (e.g., TWAN configuring device).

In the examples described above, the program can be stored with the use of a variety of types of non-transitory computer readable media (non-transitory computer readable medium) and provided to a computer. The non-transitory computer readable media include a variety of types of tangible storage media (tangible storage medium). Examples of the non-transitory computer readable media include a magnetic recording medium (e.g., flexible disk, magnetic tape, hard disk drive), a magneto-optical recording medium (e.g., magneto-optical disk), a CD-ROM (Read Only Memory), a CD-R, a CD-R/W, and a semiconductor memory (e.g., mask ROM, PROM (Programmable ROM), EPROM (Erasable PROM), flash ROM, RAM (Random Access Memory)). In addition, the program may be provided to a computer in the form of a variety of types of transitory computer readable media (transitory computer readable medium). Examples of the transitory computer readable media include an electric signal, an optical signal, and an electromagnetic wave. The transitory computer readable media can provide the program to a computer via a wired communication line, such as an electric wire and an optical fiber, or via a wireless communication line.

It is to be noted that the present invention is not limited to the embodiments described above, and modifications can be made as appropriate within the scope that does not depart from the technical spirit.

Thus far, the invention of the present application has been described with reference to the embodiments, but the invention of the present application is not limited by the foregoing. Various modifications that a person skilled in the art can understand within the scope of the invention can be made to the configurations and the details of the invention of the present application.

This application claims priority to Japanese Patent Application No. 2015-053052, filed on March 17, 2015 and Japanese Patent Application No. 2015-108456, filed on May 28, 2015, and the entire discloses of which are incorporated herein.

### Reference Signs List

- 10: base station
- 20: access point
- 30: access point managing device
- 40: application server
- 45: service network
- 50: communication terminal
- 60: eNB
- 71: AP
- 72: AP
- 73: AP
- 80: TWAN configuring device
- 90: MEC
- 100: SGW
- 110: PGW
- 120: MME
- 130: HSS
- 140: PCRF
- 150: AAA
- 160: UE
- 161: wireless LAN communication unit
- 162: wireless LAN processing unit
- 163: LTE communication unit
- 164: RRC processing unit
- 165: NAS processing unit
- 166: access selection control unit
- 170: PDN
- 601: S1AP communication unit
- 602: S1AP call processing unit
- 603: RRC processing unit
- 604: wireless processing unit
- 605: GTP-U (S1) communication unit
- 606: GTP-U (S1) processing unit
- 607: Context storing unit
- 608: GTP-U (X2) processing unit
- 609: GTP-U (X2) communication unit
- 610: X2AP processing unit
- 611: X2AP communication unit
- 710: TWAG
- 711: S2a communication unit
- 712: S2a processing unit
- 713: Context storing unit
- 714: GTP-U (X2) processing unit
- 715: GTP-U (X2) communication unit
- 716: X2AP processing unit
- 717: X2AP communication unit
- 718: U-Plane processing unit for AP
- 719: U-Plane communication unit for AP
- 720: TWAP
- 721: STa communication unit
- 722: STa processing unit
- 723: Context storing unit
- 724: C-Plane processing unit for AP
- 725: C-Plane communication unit for AP

## Claims

1. A communication system, comprising:
a base station that forms a mobile communication area;
an access point that forms a wireless LAN communication area within the mobile communication area;
an access point managing device that manages a plurality of the access points; and
an application server that provides an application service to a communication terminal located in the mobile communication area via the base station,
wherein, in a case in which the communication terminal moves from an outside of the wireless LAN communication area within the mobile communication area into the wireless LAN communication area, the access point managing device establishes a data transmission path to the base station and relays data transmission between the base station and the communication terminal.

2. The communication system according to Claim 1, wherein the base station transmits, to the access point managing device, identification information indicating that the communication terminal has been communicating with the base station, in a case in which the communication terminal moves from the outside of the wireless LAN communication area within the mobile communication area into the wireless LAN communication area.

3. The communication system according to Claim 1 or 2, wherein the base station transmits, to the communication terminal, a message instructing a handover to the access point, in a case in which the communication terminal moves from the outside of the wireless LAN communication area within the mobile communication area into the wireless LAN communication area.

4. The communication system according to any one of Claims 1 to 3, wherein the base station transmits, to the access point managing device, data addressed to the communication terminal, in a case in which the communication terminal moves from the outside of the wireless LAN communication area within the mobile communication area into the wireless LAN communication area.

5. The communication system according to any one of Claims 1 to 4, wherein the base station communicates with the communication terminal by setting a wireless circuit between the communication terminal and the base station, in a case in which the communication terminal moves from an inside of the wireless LAN communication area within the mobile communication area to the outside of the wireless LAN communication area.

6. The communication system according to Claim 5, wherein the base station transmits, to the access point managing device, a message instructing a release of the wireless circuit between the communication terminal and the access point managing device, in a case in which the communication terminal moves from the inside of the wireless LAN communication area within the mobile communication area to the outside of the wireless LAN communication area.

7. A base station, comprising:
in a case in which a wireless LAN communication area is formed by an access point within a mobile communication area formed by the base station and a communication terminal to which an application service is provided from an application server via the base station moves from an outside of the wireless LAN communication area within the mobile communication area into the wireless LAN communication area,
communication means for establishing a data transmission path between an access point managing device that manages the access point and the base station; and
processing means for controlling data associated with the application service to be transmitted to the communication terminal via the estabilished data transmission path.

8. An access point managing device, comprising:
in a case in which a wireless LAN communication area is formed by an access point within a mobile communication area formed by a base station and a communication terminal to which an application service is provided from an application server via the base station moves from an outside of the wireless LAN communication area within the mobile communication area into the wireless LAN communication area,
communication means for establishing a data transmission path between the base station and the access point managing device; and
processing means for relaying, by using the data transmission path, data associated with the application service transmitted between the communication terminal and the base station.

9. A terminal, comprising:
wireless LAN communication means for receiving an application service provided by an application server from an access point managing device via a data transmission path established between a base station and the access point managing device that manages an access point, in a case in which the terminal moves from an outside of a wireless LAN communication area formed by the access point into the wireless LAN communication area within a mobile communication area formed by the base station.

10. A communication method at a base station, the communication method comprising:
in a case in which a wireless LAN communication area is formed by an access point within a mobile communication area formed by a base station and a communication terminal to which an application service is provided from an application server via the base station moves from an outside of the wireless LAN communication area into the wireless LAN communication area within the mobile communication area,
establishing a data transmission path between an access point managing device that manages the access point and the base station; and
transmitting data associated with the application service to the communication terminal via the established data transmission path.

11. A relay method at an access point, the relay method comprising:
in a case in which a wireless LAN communication area is formed by an access point within a mobile communication area formed by a base station and a communication terminal to which an application service is provided from an application server via the base station moves from an outside of the wireless LAN communication area into the wireless LAN communication area within the mobile communication area,
establishing a data transmission path between the base station and the access point; and
relaying, by using the data transmission path, data associated with the application service transmitted between the communication terminal and the base station.

12. A non-transitory computer readable medium storing a program that causes a computer to execute:
in a case in which a wireless LAN communication area is formed by an access point within a mobile communication area formed by a base station and a communication terminal to which an application service is provided from an application server via the base station moves from an outside of the wireless LAN communication area into the wireless LAN communication area within the mobile communication area,
establishing a data transmission path between an access point managing device that manages the access point and the access point; and
transmitting data associated with the application service to the communication terminal via the set data transmission path.

13. A non-transitory computer readable medium storing a program that causes a computer to execute:
in a case in which a wireless LAN communication area is formed by an access point within a mobile communication area formed by a base station and a communication terminal to which an application service is provided from an application server via the base station moves from an outside of the wireless LAN communication area into the wireless LAN communication area within the mobile communication area,
establishing a data transmission path to the base station; and
relaying, by using the data transmission path, data associated with the application service transmitted between the communication terminal and the base station.
